Europäisches Patentamt

European Patent Office

Office européen des brevets

(11) Publication number: **0 270 853**
**A1**

(12) **EUROPEAN PATENT APPLICATION**

(21) Application number: **87116510.6**

(22) Date of filing: **09.11.87**

(51) Int. Cl.⁴ **G09F 23/00** , G11B 23/023

(30) Priority: **20.11.86 IT 21686 U**
**20.02.87 IT 21187 U**

(43) Date of publication of application:
**15.06.88 Bulletin 88/24**

(84) Designated Contracting States:
**AT BE CH DE ES FR GB GR IT LI LU NL SE**

(71) Applicant: **Russo, Vincenzo**
**Via Caboto 8**
**I-15011 Acqui Terme(IT)**

(72) Inventor: **Russo, Vincenzo**
**Via Caboto 8**
**I-15011 Acqui Terme(IT)**

(74) Representative: **Porsia, Bruno et al**
**c/o Succ. Ing. Fischetti & Weber Via Caffaro**
**3/2**
**I-16124 Genova(IT)**

(54) **Case for videocassettes, or the like.**

(57) To use video cassette cases as advertising media for third parties, over at least one area of the outer and/or inner surface of at least one of the box parts (2, 3) forming the case (1) and/or of the spine (5) thereof, one or more advertisements or advertising spaces (4) are provided, which are either directly printed on the respective surface of the case, or are provided on possibly replaceable supports (6) to be applied thereto.

Fig. 1

EP 0 270 853 A1

### "Case for video cassettes or the like."

The present invention relates to cases, particularly to those cases which are adapted for accomodating video cassettes, or the like, and are formed by two complementary parts of a box that are interconnectable by means of a hinge portion, so that they are openable in the fashion of a book.

The object of the invention is to use the above cases also as advertising media for third parties when the same are put up for sale with the relative video cassette therewithin, particularly when these cases circulate between different users, in the instance they are hired, or they are exchanged.

According to the invention, this object is attained by providing a case of the above type, characterized in that at least one of the two box parts presents one or more advertisements (in form of words and/or pictures) from and for third parties over at least one area of its surface.

For this purpose, any suitable surface of the case may be used for any advertising matter, more particularly, it is possible to either entirely or partly use the outer and/or inner surface of at least one of the two box parts and/or of the hinge web portion interconnecting the two box parts.

The said advertising matter may be permanently associated with the respective surface of the case by being, for example, printed on the said surface, or it may be applied thereto, and it may, for example, be in form of sheets, or the like, of paper or of any other suitable material, which are glued or otherwise secured to the selected area of the outer and/or inner surface of the case.

Furthermore, the case may be provided with suitable external and/or internal transparent pockets within which the sheets bearing the advertising matter are accomodated. These pockets may be either closed permanently, or they may be left open, or else they may be made of the openable and re-closable type, so as to enable the replacement of one or more advertisements.

Some embodiments of the invention will be disclosed in more detail hereinbelow, and are diagrammatically shown merely by way of non-limiting examples in the accompanying drawings, in which:

Figure 1 is a perspective view showing a first embodiment of a video cassette case according to the invention, with a number of advertisements on the outer surface of said case.

Figures 2 and 3 are perspective views showing a further embodiment of a video cassette case according to the invention, with a number of advertisements on a sheet to be slipped into an external transparent pocket in the case.

Figure 4 shows a still further embodiment of the video cassette case, with a number of advertisements on the inner surface of said case.

In all the figures of the drawings, numeral 1 denotes a case for video cassettes or the like. The case 1 consists of two complementary box parts 2 and 3, with the part 2 serving, for example, as base for housing a video cassette (not shown), and the part 3 forming the lid. The two box parts 2 and 3 are preferably made of plastics material and are interconnected by means of a hinge web portion or spine 5, whereby an opening of case 1 in the fashion of a book is made possible.

According to the invention, over at least one area of the outer and/or inner surface of the box part 2 and/or 3 a number of advertisements or advertising spaces 4 from and for third parties are provided, which may consist of any desired words and/or pictures.

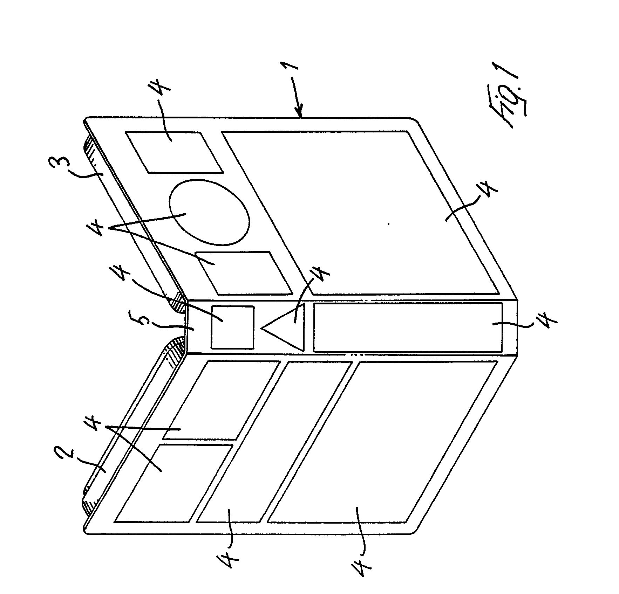

In figures 1 to 3 there is shown a video cassette case 1 in which the advertisements or advertising spaces 4 are provided on the outer surface of the case, more particularly on the outer surface of both of the box parts 2, 3 and on the outer surface of the hinge web portion 5. Of course, the advertisements or advertising spaces 4 maybe provided only on the outer surface of the one or the other box part 2 or 3 and/or on the outer surface of the web portion or spine 5. Moreover, at least one of the spaces 4 on the outer surface of the one and/or the other box part 2, 3 and/or of the spine 5 may bear the information about the content of the video cassette held in case 1.

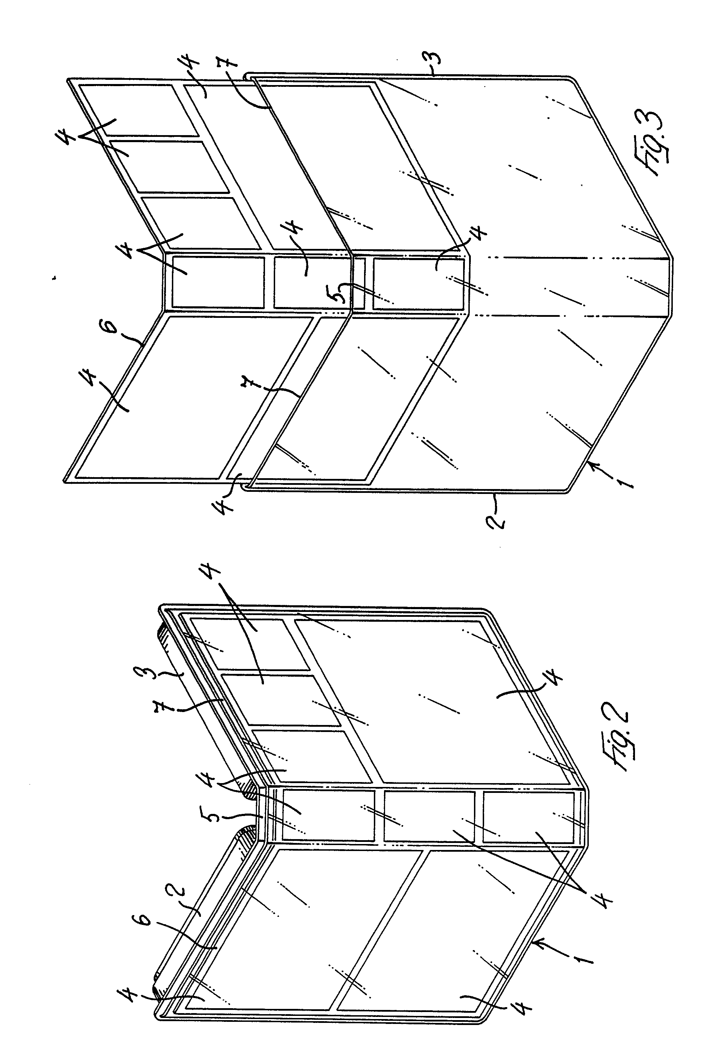

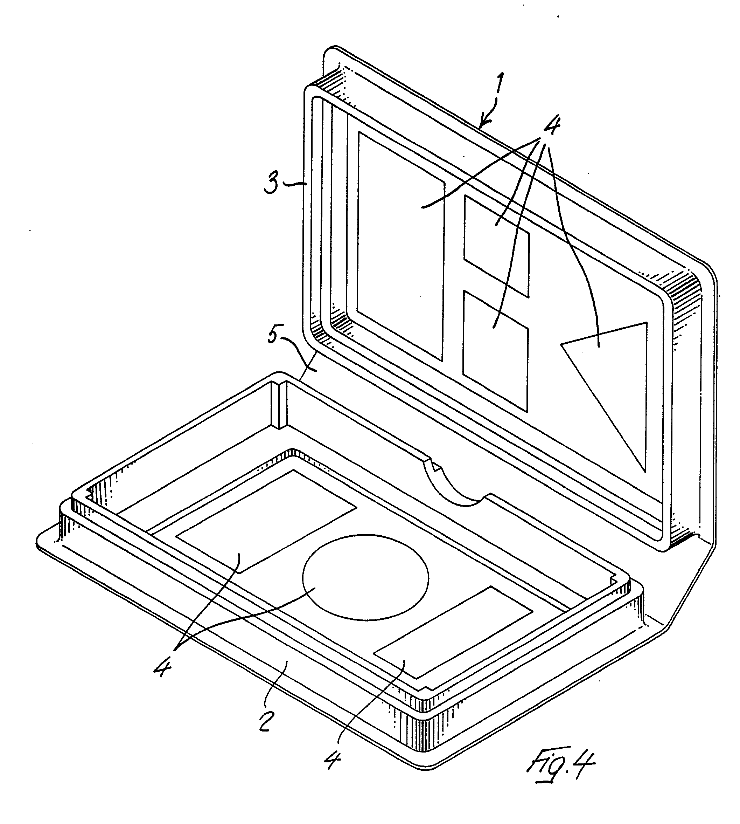

In figure 4 there is shown a case 1 for video cassettes, in which the advertisements or advertising spaces 4 are provided on the inner surface of the case, more particularly on the inner surface of both of the box parts 2, 3. When opening the case 1, the advertisements provided on the inner surface of the lid part 3 are immediately visible. The advertisements provided on the inner surface of part 2 of the case however appear only after the video cassette having been removed from its respective housing. Of course, also the advertisements or advertising spaces 4 on the inner surface of case 1 may be provided only on the one or the other box part 2, 3, and even or only on the inner surface of the hinge web portion or spine 5.

It is furthermore understood that the case 1 may be provided with advertisements or advertising spaces 4 both on the outer and on the inner surface of at least one of the box parts 2, 3 and/or of the hinge web portion or spine 5.

In any case, the advertisements 4 may be permanently associated with the respective surface of case 1, for example, they may be either printed thereon as shown in figures 1 and 4, or they may be applied to the respective surface of the case, and may be, for example, made in form of adhesive or pressure-sensitive labels of paper, plastics material, or any other suitable material, which are applicable to the surface of case 1.

In one possible embodiment shown in figures 2 and 3, the advertisements or advertising spaces 4 are provided on a sheet 6 made of paper, light cardboard, plastics material, or any other suitable material, which is slipped into an external transparent pocket 7 in case 1. In the shown embodiment, the said external pocket 7 extends over the whole outer surface of case 1 and consists of a transparent sheet that covers the outside of the two box parts 2, 3 and of the hinge web portion or spine 5, and that is firmly connected, for example welded, to the case 1 in correspondence of three of its sides, while the fourth side (for example, the upper side in figures 2 and 3) is left open for insertion of sheet 6 bearing the advertising matter 4, as it clearly appears in figure 3. Of course, similar transparent pockets 7 may be provided only on the one or the other of the two box parts 2, 3, or as separate pockets on both of the box parts 2, 3 and/or on the hinge web portion or spine 5 of case 1. Similar transparent pockets meant for holding sheets bearing advertising matter may be provided also on the inner surface of one or both of the box parts 2, 3 and/or of the hinge web portion or spine 5.

## Claims

1. A case (1), particularly a case for video cassettes to be hired, consisting of two complementary parts (2, 3) of a box, and characterized in that at least one of the two box parts (2, 3) presents over at least one area of its outer and/or inner surface one or more advertisements or advertising spaces (4) from and for third parties.

2. The case according to claim 1, in which the two box parts (2, 3) are interconnected by means of a hinge web portion or spine (5) so as to be openable in the fashion of a book, characterized in that also or at least only one area of the outer and/or inner surface of the hinge web portion or spine (5) presents one or more advertisements or advertising spaces (4).

3. The case according to any one of claims 1 or 2, characterized in that the advertisement or advertisements (4) are permanently associated with the respective surface of the case (1).

4. The case according to any one of claims 1 or 2, characterized in that the advertisement or advertisements (4) are printed on the respective surface of the case (1).

5. The case according to any one of claims 1 or 2, characterized in that the advertisement or advertisements (4) are provided on supports of any suitable material, which are applied to the respective surface of the case (1).

6. The case according to claim 5, characterized in that the advertisement or advertisements (4) are provided on sheets, labels, or the like, of paper or of any other suitable material, which are glued or otherwise secured to the respective surface of the case (1).

7. The case according to claim 6, characterized in that the advertisement or advertisements (4) are provided on sheets or on adhesive or pressure-sensitive labels.

8. The case according to claim 5, charcaterized in that the advertisement or advertisements are provided on sheets or the like, of paper or of any other suitable material, which are accomodated within one or more transparent pockets provided on the respective surface of the case, and are so made as to be either permanently closed or open pockets, or else openable and re-closable pockets.

Fig.1

Fig. 2

Fig. 3

0 270 853

Fig.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-U-8 522 105 (EYERN SCHMALZ et al.) * Claims 1-13; page 8, paragraph 4 - page 10, paragraph 2; figures 1a-3b * | 1,2,5-7 | G 09 F 23/00 G 11 B 23/023 |
| A | | 8 | |
| X | GB-A-2 094 761 (RODWELL PLASTICS LTD) * Abstract; page 2, lines 41-60; figures 1,3 * | 1,2,5,6 | |
| X | FR-A-2 503 667 (STD VRAC) * Claims 1,2; page 1, lines 1-19; page 2, line 16 - page 3, line 17; figures 1-3 * | 1,2,5,6 | |
| A | FR-A-2 518 297 (DEMO) * Claims 1-4; page 4, lines 6-16; page 5, lines 4-9; figures 1,2 * | 1,3,4 | |

TECHNICAL FIELDS SEARCHED (Int. Cl.4)

G 09 F
G 11 B

The present search report has been drawn up for all claims

| Place of search | Date of completion of the search | Examiner |
|---|---|---|
| THE HAGUE | 15-02-1988 | FRANSEN L.J.L. |

EPO FORM 1503 03.82 (P0401)